# FASCICULE DE BREVET EUROPEEN

(11) **EP 4 010 577 B1**
(45) Date de publication et mention de la délivrance du brevet: **11.10.2023**
(21) Numéro de dépôt: 20820246.5
(22) Date de dépôt: 31.07.2020
(51) Int. Cl.: F02K 1/72, F02K 1/76

(54) **INVERSEUR POUR AÉRONEF COMPRENANT UN MÉCANISME DE FREINAGE D'UN CAPOT MOBILE EN CAS DE SURCOURSE**
SCHUBUMKEHRVORRICHTUNG EINES FLUGZEUGES MIT EINER BREMSVORRICHTUNG ZUM VERLANGSAMEN EINER BEWEGLICHEN HAUBE BEI ÜBERHUB
AIRCRAFT THRUST REVERSER COMPRISING A BRAKING MECHANISM FOR SLOWING A MOBILE COWL IN THE EVENT OF OVERTRAVEL

(30) Priorité: 05.08.2019 FR 1908983
(43) Date de publication de la demande: 15.06.2022
(73) Titulaire: Safran Nacelles, 76700 Gonfreville-l'Orcher (FR)
(72) Inventeur: CHARLIAC, Fabien, 77550 MOISSY-CRAMAYEL (FR); BREBION, Benjamin, 77550 MOISSY-CRAMAYEL (FR); MARLAY, Thomas, 77550 MOISSY-CRAMAYEL (FR); CORDIEZ, Antoine, 77550 MOISSY-CRAMAYEL (FR)
(74) Mandataire: Brevalex
(86) Numéro de dépôt international: PCT/FR2020/051418
(87) Numéro de publication internationale: WO 2021/023935

(56) Documents cités:
- WO-A1-2015/040347
- FR-A1- 3 062 637

## Description

### Domaine technique

L'invention se rapporte au domaine des inverseurs de poussée pour ensemble propulsif d'aéronef. L'invention se rapporte plus spécifiquement au mécanisme de retenue axiale de la structure externe mobile d'un tel inverseur.

### État de la technique antérieure

De manière générale, un inverseur de poussée peut être placé dans une configuration de jet direct, permettant à l'ensemble propulsif de générer une poussée, et dans une configuration de jet inversé - ou d'inversion de poussée - dans laquelle une partie des gaz circulant dans l'ensemble propulsif est redirigée vers l'avant de l'ensemble propulsif, générant ainsi une contre-poussée de freinage de l'aéronef.

Pour ce faire, les inverseurs comprennent généralement une structure externe mobile telle qu'un capot coulissant. En jet direct, le capot est dans une position de fermeture de manière à guider un écoulement de fluide dans l'ensemble propulsif, cet écoulement contribuant pleinement à la poussée. En jet inversé, le capot est dans une position d'ouverture de manière à dégager une ouverture radiale configurée pour évacuer de l'ensemble propulsif une partie de l'écoulement de fluide, afin de générer la contre-poussée.

Dans un inverseur conventionnel, par exemple celui décrit dans le document WO 2011/064479 A1, des actionneurs tels que des vérins sont prévus pour ouvrir et fermer le capot. Lors de son déplacement entre les positions de fermeture et d'ouverture, le capot est guidé par des rails ou glissières solidaires d'une partie fixe de l'ensemble propulsif.

En cas de rupture ou d'absence d'un tel vérin de commande du capot, les efforts aérodynamiques appliqués sur le capot en phase de vol sont susceptibles de le déplacer au-delà de la position d'ouverture et d'entraîner son déboîtement par rapport aux rails ou glissières de guidage.

Pour empêcher un recul trop important du capot et donc son déboîtement lors du fonctionnement de l'inverseur, il est connu du document WO 2015/040347 A1 de disposer une butée axiale au moins sur l'un des rails ou glissières de guidage.

Une telle butée nécessite de surdimensionner au moins localement la structure dont elle est solidaire compte tenu de l'énergie cinétique du capot lors de sa collision avec la butée, ce qui tend à augmenter la masse de l'inverseur ainsi que son coût.

### Exposé de l'invention

L'invention vise à procurer un inverseur de poussée capable de retenir la structure externe mobile en cas de défaillance ou d'absence d'un actionneur de commande de cette structure, tout en évitant les inconvénients associés à une butée axiale conventionnelle.

A cet effet, l'invention a pour objet un inverseur de poussée pour ensemble propulsif d'aéronef, cet inverseur comprenant une structure fixe et une structure externe mobile, cet inverseur étant configuré pour être placé dans :
- une configuration de jet direct dans laquelle la structure externe mobile est dans une position de fermeture, la structure externe mobile en position de fermeture étant apte à guider un écoulement de fluide dans l'ensemble propulsif de manière à générer une poussée,
- une configuration de jet inversé dans laquelle la structure externe mobile est dans une position d'ouverture, la structure externe mobile en position d'ouverture dégageant une ouverture radiale apte à évacuer une partie dudit écoulement de fluide de l'ensemble propulsif de manière à générer une contre-poussée.

Le déplacement de la structure externe mobile de la position de fermeture vers la position d'ouverture définit un sens de déplacement positif.

L'invention se caractérise en ce que la structure fixe comprend un premier élément de freinage et la structure externe mobile comprend un deuxième élément de freinage, le premier et le deuxième élément de freinage coopérant l'un avec l'autre par glissement avec frottement lorsque la structure externe mobile est déplacée dans le sens positif au-delà de la position d'ouverture de manière à générer un effort de freinage s'opposant à ce déplacement, le premier et le deuxième élément de freinage étant configurés de sorte que l'effort de freinage augmente lorsque la structure externe mobile s'éloigne de la position d'ouverture.

Un tel inverseur permet d'éviter une collision brutale entre la structure externe mobile et la structure fixe en amortissant la structure externe mobile lorsque celle-ci réalise une surcourse, en étant déplacée dans le sens positif au-delà de la position d'ouverture sous l'action d'efforts aérodynamiques, notamment en cas de rupture d'un actionneur de commande de la structure externe mobile lors du fonctionnement de l'inverseur en phase de vol.

Un tel amortissement de la structure externe mobile permet de réduire la masse et le coût de l'inverseur par rapport à un inverseur dans lequel la rétention axiale est assurée par une butée conventionnelle.

L'invention permet aussi de simplifier l'assemblage de l'inverseur puisque la rétention axiale de la structure externe mobile ne nécessite pas d'équiper l'inverseur d'une butée axiale.

De plus, les éléments de freinage peuvent être configurés de manière à définir des chemins d'efforts continus assurant une transition souple entre la course de la structure externe mobile en amont de la position d'ouverture et sa surcourse en aval de cette position.

Plus généralement, l'invention permet d'améliorer l'absorption de l'énergie cinétique de la structure externe mobile lors de l'interruption de sa course au-delà de la position d'ouverture et de préserver l'intégrité structurelle de l'inverseur tout en évitant un surdimensionnement des éléments assurant la rétention axiale de la structure externe mobile.

De préférence, le premier et le deuxième élément de freinage peuvent être configurés de sorte que l'effort de freinage comprenne au moins une composante perpendiculaire par rapport à une direction de déplacement de la structure externe mobile.

La direction de déplacement de la structure externe mobile correspond à une direction le long de laquelle se déplace la structure externe mobile lorsque l'inverseur passe de la configuration de jet direct à la configuration de jet inversé.

Dans un mode de réalisation, l'un parmi le premier et le deuxième élément de freinage peut comprendre au moins un élément de guidage tel qu'une glissière et l'autre parmi le premier et le deuxième élément de freinage peut comprendre au moins un élément guidé tel qu'un pion, ledit effort de freinage résultant de la coopération entre l'élément de guidage et l'élément guidé.

Ainsi par exemple, selon une première alternative, le premier élément de freinage appartenant à la structure fixe peut comprendre une ou plusieurs glissières et le deuxième élément de freinage appartenant à la structure externe mobile peut comprendre un ou plusieurs pions coopérant avec la ou les glissières de manière à produire l'effort de freinage. Selon une deuxième alternative non limitative, le premier élément de freinage appartenant à la structure fixe peut comprendre un ou plusieurs pions et le deuxième élément de freinage appartenant à la structure externe mobile peut comprendre une ou plusieurs glissières coopérant avec le ou les pions de manière à produire l'effort de freinage.

De préférence, le ou les éléments de guidage (p. ex. glissières) du premier élément de freinage (première alternative) ou du deuxième élément de freinage (deuxième alternative) peuvent être sensiblement parallèles à la direction de déplacement de la structure externe mobile.

Le premier élément de freinage (première alternative) ou le deuxième élément de freinage (deuxième alternative) peut par exemple comprendre deux éléments de guidage (p. ex. glissières) sensiblement parallèles entre eux.

Dans un mode de réalisation, l'au moins un élément de guidage peut former une rainure configurée pour recevoir l'au moins un élément guidé, cette rainure ayant une dimension qui varie selon la direction de déplacement de la structure externe mobile.

Une telle variation de dimension permet de modifier la force de frottement entre le premier et le deuxième élément de freinage en fonction de la position relative du premier et du deuxième élément de freinage l'un par rapport à l'autre le long de la direction de déplacement de la structure externe mobile, permettant en particulier d'augmenter l'effort de freinage lorsque la structure externe mobile s'éloigne de la position de fermeture.

L'inverseur peut comprendre des premiers moyens de guidage configurés pour guider la structure externe mobile entre la position de fermeture et la position d'ouverture et des deuxièmes moyens de guidage configurés pour guider la structure externe mobile lorsque celle-ci est déplacée dans le sens positif depuis la position d'ouverture, ces deuxièmes moyens de guidage comprenant les premier et deuxième éléments de freinage.

Dans un mode de réalisation, l'inverseur peut comprendre une glissière solidaire de l'une parmi la structure fixe et la structure externe mobile et un élément coulissant solidaire de l'autre parmi la structure fixe et la structure externe mobile, cette glissière formant une première rainure configurée pour recevoir ledit élément coulissant, la glissière formant une deuxième rainure formant l'un parmi le premier et le deuxième élément de freinage, la deuxième rainure étant configurée pour recevoir l'autre parmi le premier et le deuxième élément de freinage.

Ledit élément coulissant peut de préférence former l'un desdits premiers moyens de guidage et ladite première rainure peut former un autre desdits premiers moyens de guidage.

Dans un mode de réalisation, l'élément de freinage reçu par ladite deuxième rainure peut être solidaire et/ou être porté par ledit élément coulissant.

L'inverseur peut comprendre une butée configurée pour empêcher le déplacement de la structure externe mobile dans ledit sens positif au-delà d'une position d'arrêt, la butée étant configurée de sorte que la structure externe mobile soit soumise audit effort de freinage lorsque celle-ci est déplacée dans le sens positif entre la position d'ouverture et la position d'arrêt.

Lorsque l'inverseur comprend une telle butée, l'un parmi le premier et le deuxième élément de freinage peut être configuré pour coopérer avec la butée lorsque la structure externe mobile est déplacée jusqu'à la position d'arrêt de manière à immobiliser la structure externe mobile dans la position d'arrêt.

Dans un mode de réalisation, l'un parmi la butée et l'élément de freinage coopérant avec cette butée peut être configuré pour être plastiquement déformé par l'autre parmi la butée et l'élément de freinage coopérant avec cette butée lorsque la structure externe mobile est déplacée jusqu'à la position d'arrêt.

Une telle déformation plastique permet d'empêcher le retour de la structure externe mobile en position de fermeture.

L'invention a aussi pour objet un ensemble propulsif d'aéronef, cet ensemble propulsif comprenant un inverseur de poussée tel que défini ci-dessus, ainsi qu'un aéronef comprenant un tel ensemble propulsif.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
La figure 1 est une vue schématique en coupe axiale d'un ensemble propulsif d'aéronef conforme à l'invention, cet ensemble propulsif comprenant un turboréacteur à double corps et à double flux ;
La figure 2 est une demi-vue schématique en coupe axiale d'un inverseur de poussée conforme à l'invention, dans une configuration de jet direct ;
La figure 3 est une demi-vue schématique en coupe axiale de l'inverseur de la figure 2, dans une configuration de jet inversé ;
La figure 4 est une vue schématique en perspective d'une partie d'un inverseur de poussée conforme à l'invention, montrant un mécanisme de guidage de la structure externe mobile de cet inverseur ;
La figure 5 est un agrandissement d'une partie de la figure 4, centré sur ledit mécanisme de guidage ;
La figure 6 est une vue schématique en perspective d'un ensemble propulsif de l'art antérieur, cet ensemble propulsif comprenant un inverseur de poussée dont la structure externe mobile est représentée dans une position de basculement ;
La figure 7 est une vue schématique en coupe transversale d'un mécanisme de guidage et de freinage d'une structure externe mobile d'un inverseur de poussée conforme à l'invention, dans une configuration dans laquelle la structure externe mobile est entre une position de fermeture et une position d'ouverture, ce mécanisme comprenant un pion solidaire de la structure externe mobile reçu dans une rainure d'une structure fixe de l'inverseur ;
La figure 8 est une vue schématique en coupe longitudinale du mécanisme de la figure 7, montrant le pion dans une position dans laquelle il n'interagit pas avec la rainure, cette position correspondant à une position de la structure externe mobile comprise entre les positions de fermeture et d'ouverture ;
La figure 9 est une vue schématique en coupe longitudinale du mécanisme de la figure 7, montrant le pion dans une position correspondant à la position d'ouverture de la structure externe mobile ;
La figure 10 est une vue schématique en coupe longitudinale du mécanisme de la figure 7, montrant le pion dans une position d'arrêt correspondant à une position de la structure externe mobile située au-delà de la position d'ouverture ;
La figure 11 est une vue schématique en coupe longitudinale du mécanisme de la figure 7, montrant le pion dans une position d'arrêt dans laquelle il est retenu par une butée après avoir été plastiquement déformé par cette butée.

### Description détaillée de modes de réalisation

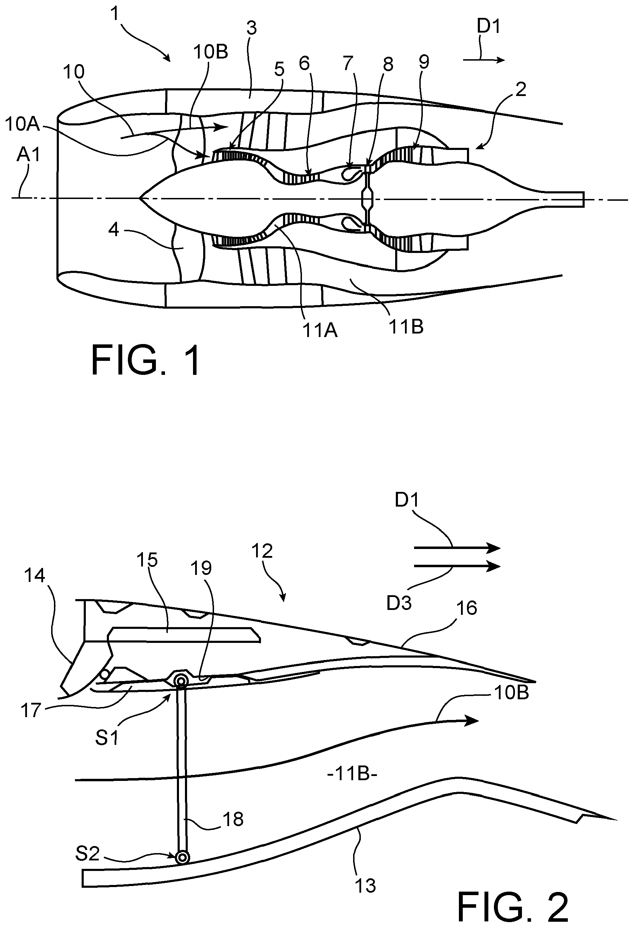

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont », « aval », « avant » et « arrière » sont définis par rapport à un sens D1 d'écoulement des gaz à travers l'ensemble propulsif 1 lorsque celui-ci est propulsé.

De manière conventionnelle, le terme « direction » désigne une ligne, généralement droite, le long de laquelle un fluide ou un objet peut par exemple être déplacé, et le terme « sens » désigne une orientation d'un tel déplacement, en particulier selon une direction.

Le turboréacteur 2 présente un axe central longitudinal A1 autour duquel s'étendent ses différents composants, en l'occurrence, de l'amont vers l'aval du turboréacteur 2, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

De manière conventionnelle, lors du fonctionnement d'un tel turboréacteur 2, un écoulement d'air 10 pénètre dans l'ensemble propulsif 1 par une entrée d'air en amont de la nacelle 3, traverse la soufflante 4 puis se divise en un flux primaire 10A central et un flux secondaire 10B. Le flux primaire 10A s'écoule dans une veine primaire 11A de circulation des gaz traversant le générateur de gaz. Le flux secondaire 10B s'écoule quant à lui dans une veine secondaire 11B entourant le générateur de gaz et délimitée radialement vers l'extérieur par la nacelle 3.

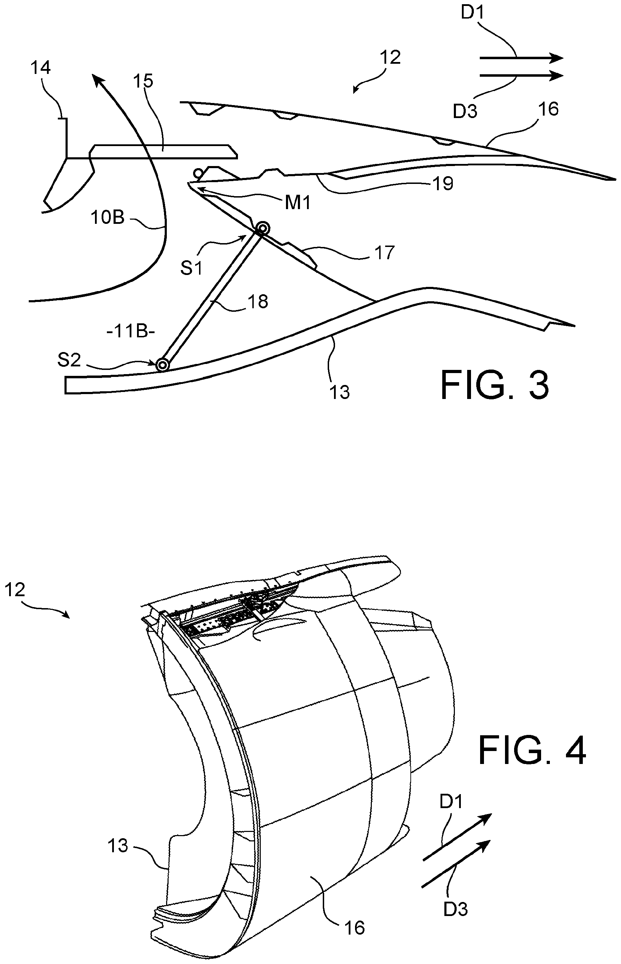

L'invention se rapporte à un inverseur de poussée 12 tel qu'illustré aux figures 2 et 3, ou à la figure 4, pour inverser la poussée générée par un tel ensemble propulsif 1.

En référence aux figures 2 et 3, l'inverseur 12 comprend d'une part des éléments fixes par rapport à un stator du turboréacteur 2, parmi lesquels une structure interne fixe 13, un cadre avant 14 et des grilles 15 portées par le cadre avant 14.

Cet inverseur 12 comprend d'autre part des éléments mobiles par rapport aux éléments fixes précités, parmi lesquels une structure externe mobile 16 formant dans cet exemple un capot mobile coulissant, des volets d'obturation 17 et des biellettes 18. Ces éléments mobiles permettent de modifier la configuration de l'inverseur 12.

La figure 2 montre l'inverseur 12 dans une configuration de jet direct. Dans cette configuration, le capot mobile 16 est dans une position de fermeture dans laquelle il est axialement en appui contre le cadre avant 14 en recouvrant les grilles 15.

En jet direct, le capot mobile 16 et la structure interne fixe 13 délimitent radialement entre elles une partie aval de la veine secondaire 11B.

Les volets d'obturation 17 sont dans une position rétractée dans laquelle ils sont logés dans une cavité 19 du capot mobile 16 de manière à ne pas obturer la veine secondaire 11B.

Ainsi, en jet direct, l'inverseur 12 permet de canaliser le flux secondaire 10B vers l'arrière de l'ensemble propulsif 1 de sorte que ce flux secondaire 10B contribue pleinement à la propulsion de l'aéronef.

La figure 3 montre l'inverseur 12 dans une configuration d'inversion de poussée, aussi appelée jet inversé. Dans cette configuration, le capot mobile 16 est dans une position d'ouverture dans laquelle il dégage une ouverture radiale constituée dans cet exemple par des ouvertures des grilles 15. En effet, la translation axiale du capot mobile 16, vers l'arrière de l'ensemble propulsif 1 par rapport au cadre avant 14, découvre les grilles 15 qui sont solidaires du cadre avant 14.

Le coulissement du capot mobile 16 de la position de fermeture (figure 2) vers la position d'ouverture (figure 3) entraîne un déploiement des volets d'obturation 17 dans la veine secondaire 11B. Pour ce faire, les volets d'obturation 17 sont articulés au capot mobile 16 en un point d'articulation M1 et chacune des biellettes 18 est reliée en une première extrémité S1 à un volet d'obturation 17 respectif et en une deuxième extrémité S2 à la structure interne fixe 13.

En jet inversé, les volets d'obturation 17 sont ainsi dans une position déployée de manière à dévier vers les grilles 15 une partie représentant dans cet exemple sensiblement la totalité du flux secondaire 10B (voir figure 3).

De manière connue en soi, les grilles 15 comprennent un aubage permettant de diriger le flux secondaire 10B traversant ces grilles 15 vers l'avant de l'ensemble propulsif 1.

Dans cette configuration d'inversion de poussée, le flux secondaire 10B génère ainsi une contre-poussée de freinage de l'aéronef.

Pour modifier la configuration de l'inverseur 12, celui-ci comprend des actionneurs tels que des vérins (non représentés) configurés pour déplacer le capot mobile 16 entre la position de fermeture et la position d'ouverture. Ces vérins sont dans cet exemple portés par le cadre avant 14 et sont reliés au capot mobile 16 de manière à exercer sur celui-ci un effort de poussée ou de traction, pour le déplacer respectivement de l'amont vers l'aval ou de l'aval vers l'amont.

Par convention, le déplacement du capot mobile 16 de la position de fermeture vers la position d'ouverture définit un sens de déplacement positif D3 et son déplacement de la position d'ouverture vers la position de fermeture définit un sens de déplacement négatif.

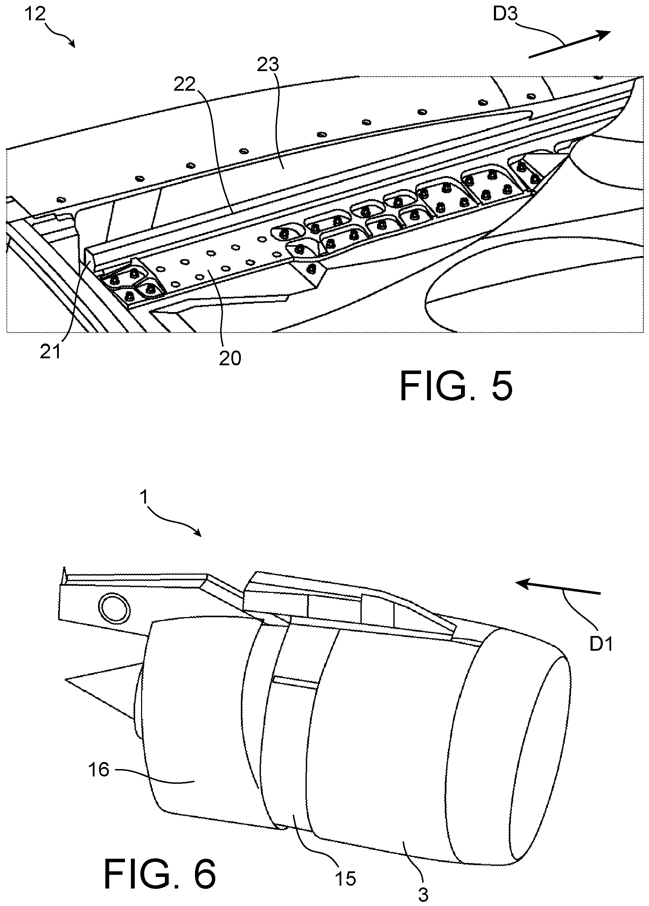

Dans le mode de réalisation des figures 4 et 5, le guidage du capot mobile 16 lors de son déplacement entre les positions de fermeture et d'ouverture est réalisé par coopération d'une première rainure 21 avec un élément coulissant 20 formant dans cet exemple un rail.

Le rail 20 est solidaire du capot mobile 16.

La première rainure 21 est formée par une glissière 22 solidaire d'une structure de maintien 23 qui constitue l'un desdits éléments fixes de l'inverseur 12.

En position d'ouverture, le capot mobile 16, en porte-à-faux sur la glissière 22, est axialement retenu par les actionneurs.

Dans un inverseur conventionnel, en cas notamment de rupture d'un actionneur et d'absence de moyen de rétention axiale de secours, il existe un risque de basculement du capot mobile 16 sous l'action des contraintes aérodynamiques auxquelles celui-ci est soumis, et par suite un risque de déboitement du capot mobile 16 par rapport à la glissière 22 (voir figure 6).

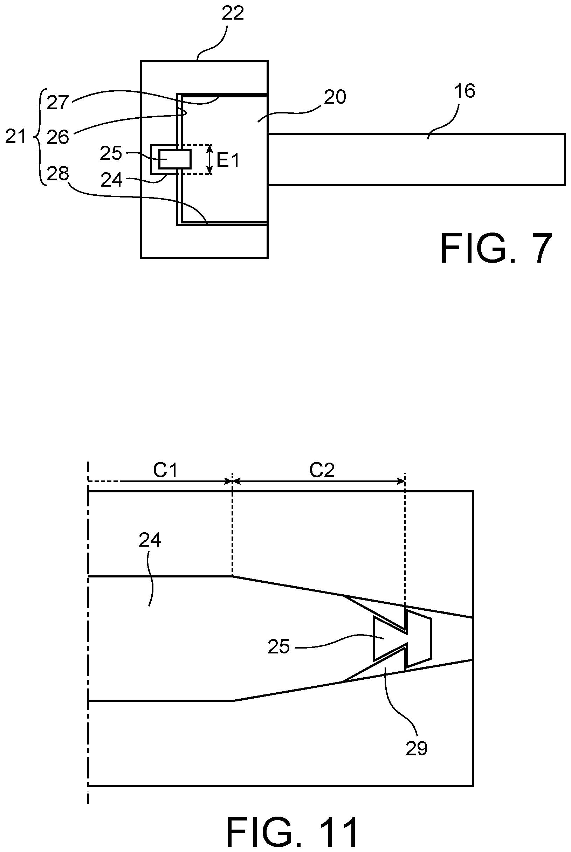

L'inverseur 12 de l'invention comprend à cet effet des éléments de freinage 24 et 25 tels que décris ci-après en référence aux figures 7 à 10.

Dans l'exemple de la figure 7, la première rainure 21 de la glissière 22 est délimitée par une face de fond 26 et par deux faces latérales 27 et 28 formant une cavité en forme de U. Bien entendu, la première rainure 21 peut avoir toute autre forme permettant de guider le capot mobile 16, par exemple une forme semi-circulaire.

La première rainure 21 est configurée pour guider le rail 20 au moins sur une course C1 du capot mobile 16 entre la position de fermeture et la position d'ouverture.

Ainsi, lorsque le capot mobile 16 est déplacé entre la position de fermeture et la position d'ouverture, le rail 20 et la première rainure 21 forment des premiers moyens de guidage du capot mobile 16.

La glissière 22 comprend dans cet exemple une deuxième rainure 24, également en forme de U, débouchant sur la face de fond 26 de la première rainure 21 (voir figure 7).

Dans cet exemple, cette deuxième rainure 24 est configurée pour recevoir un pion 25 solidaire du rail 20.

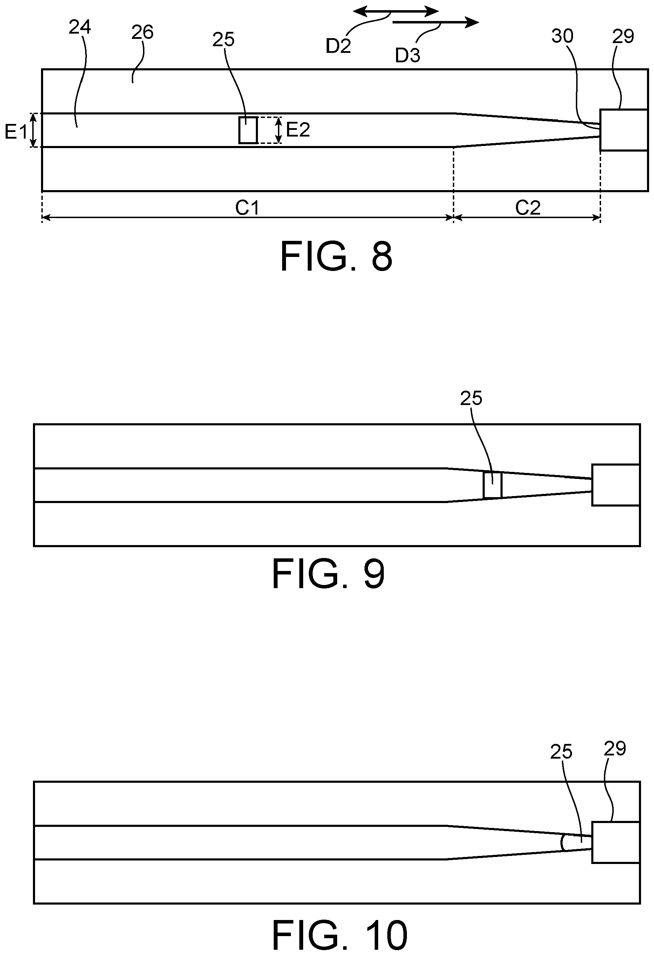

En référence à la figure 8 montrant le pion 25 dans une configuration dans laquelle le capot mobile 16 est entre la position de fermeture et la position d'ouverture, la deuxième rainure 24 et le pion 25 sont respectivement dimensionnés pour permettre un coulissement sans frottement du pion 25 dans la deuxième rainure 24 sur toute la course C1 du capot mobile 16, c'est-à-dire lorsque celui-ci est déplacé entre la position de fermeture et la position d'ouverture (voir direction D2 sur la figure 8). Un léger frottement du pion 25 avec la deuxième rainure 24 est toutefois admissible, pourvu que celui-ci n'empêche pas le coulissement du capot mobile 16 entre la position de fermeture et la position d'ouverture.

Lorsque le capot mobile 16 est déplacé dans le sens positif au-delà de la position d'ouverture, le pion 25 et la deuxième rainure 24 coopèrent l'un avec l'autre par glissement avec frottement de manière à générer un effort de freinage s'opposant à ce déplacement.

Plus précisément, la deuxième rainure 24 et le pion 25 sont configurés de sorte que l'effort de freinage augmente lorsque le capot mobile 16 s'éloigne de la position d'ouverture, dans le sens de déplacement positif D3.

Dans cet exemple, la deuxième rainure 24 présente pour ce faire une dimension E1 qui varie selon la direction D2 de déplacement du capot mobile 16.

En référence à la figure 8, la dimension E1 correspond à un écart entre deux faces en vis-à-vis l'une de l'autre délimitant la deuxième rainure 24, cette dimension E1 étant considérée perpendiculairement par rapport à la direction D2 de déplacement du pion 25 lorsque le capot mobile 16 est déplacé dans le sens positif ou négatif.

Sur une première portion longitudinale de la glissière 22, correspondant à la course C1 du capot mobile 16 entre la position de fermeture et la position d'ouverture, la dimension E1 de la deuxième rainure 24 est d'une part constante le long de la direction D2 de déplacement du pion 25 et, d'autre part, supérieure à la dimension E2 du pion 25, la dimension E2 étant également considérée perpendiculairement par rapport à la direction D2 de déplacement du pion 25 lorsque le capot mobile 16 est déplacé dans le sens positif ou négatif.

Sur une deuxième portion longitudinale de la glissière 22, correspondant à la course C2 du capot mobile 16 entre la position d'ouverture et une position d'arrêt (voir ci-après), aussi appelée surcourse, la dimension E1 diminue progressivement de manière à augmenter progressivement l'effort de frottement entre le pion 25 et la deuxième rainure 24 lorsque le capot mobile 16 est déplacé dans le sens positif entre la position d'ouverture et la position d'arrêt.

La figure 9 montre le pion 25 dans une position dans laquelle le capot mobile 16 est dans la position d'ouverture.

La figure 10 montre le pion 25 dans une position dans laquelle le capot mobile 16 est dans la position d'arrêt.

Dans cet exemple, le pion 25 a des propriétés élastiques lui permettant de reprendre sa forme initiale, illustrée à la figure 8, après avoir subi une déformation telle qu'illustrée à la figure 10.

De manière non limitative, le pion 25 peut avoir des propriétés élastiques, élasto-plastiques ou encore élasto-visco-plastiques.

Ainsi, lorsque le capot mobile 16 est déplacé dans le sens positif au-delà de la position d'ouverture, la deuxième rainure 24 et le pion 25 sont configurés de sorte que l'effort de freinage comprenne au moins une composante perpendiculaire par rapport à la direction D2 de déplacement du capot mobile 16 et du pion 25.

La deuxième rainure 24 et le pion 25 forment des deuxièmes moyens de guidage du capot mobile 16. En effet, la coopération de la deuxième rainure 24 et du pion 25 assure simultanément le freinage et le guidage du capot mobile 16.

Dans un mode de réalisation, le capot mobile 16 est guidé à la fois par les premiers moyens de guidage 20 et 21 et par les deuxièmes moyens de guidage et de freinage 24 et 25 lorsque le capot mobile 16 réalise la surcourse C2.

Plus généralement, la première rainure 21 peut être configurée pour guider le rail 20 à la fois sur tout ou partie de la course C1 et sur tout ou partie de la surcourse C2 du capot mobile 16.

Dans l'exemple des figures 8 à 10, la glissière 22 comprend une butée 29 configurée pour empêcher le déplacement du capot mobile 16 dans ledit sens positif au-delà de la position d'arrêt, c'est-à-dire pour bloquer le capot mobile 16 lorsque celui-ci atteint la position d'arrêt.

Cette butée 29 comprend une face de butée 30 perpendiculaire à la direction D2 de déplacement du pion 25 (voir figure 8).

Une telle butée 29 est optionnelle puisque la dimension E1 peut être telle que, en fin de surcourse C2, cette dimension empêche en tant que telle tout déplacement du pion 25 dans le sens positif au-delà de la position d'arrêt. Par exemple, la dimension E1 peut être nulle à la position d'arrêt.

La figure 11 montre un autre type de butée 29 configurée pour déformer plastiquement le pion 25 lorsque le capot mobile 16 est déplacé jusqu'à la position d'arrêt.

Dans un mode de réalisation non représenté, les éléments de freinage sont structurellement dissociés des moyens de guidage du capot mobile 16. Par exemple, ladite deuxième rainure 24 peut être réalisée dans une pièce distincte de la glissière 22.

Plus généralement, ce qui vient d'être décrit n'est aucunement limité à des éléments de freinage comprenant une ou plusieurs rainures 24 et un ou plusieurs pions 25. L'effort de freinage peut résulter de la coopération de tout autre type d'éléments de freinage, ou de la coopération de tout autre type d'éléments de guidage et guidé.

La structure externe mobile 16 peut en outre être une structure pivotante telle une porte d'un inverseur à portes.

## Revendications

1. Inverseur de poussée (12) pour ensemble propulsif (1) d'aéronef, cet inverseur (12) comprenant une structure fixe et une structure externe mobile (16), cet inverseur (12) étant configuré pour être placé dans :
- une configuration de jet direct dans laquelle la structure externe mobile (16) est dans une position de fermeture, la structure externe mobile (16) en position de fermeture étant apte à guider un écoulement de fluide (10B) dans l'ensemble propulsif (1) de manière à générer une poussée,
- une configuration de jet inversé dans laquelle la structure externe mobile (16) est dans une position d'ouverture, la structure externe mobile (16) en position d'ouverture dégageant une ouverture radiale apte à évacuer une partie dudit écoulement de fluide (10B) de l'ensemble propulsif (1) de manière à générer une contre-poussée,
le déplacement de la structure externe mobile (16) de la position de fermeture vers la position d'ouverture définissant un sens de déplacement positif (D3), cet inverseur (12) étant **caractérisé en ce que** la structure fixe comprend un premier élément de freinage (24) et la structure externe mobile (16) comprend un deuxième élément de freinage (25), le premier (24) et le deuxième élément de freinage (25) coopérant l'un avec l'autre par glissement avec frottement lorsque la structure externe mobile (16) est déplacée dans le sens positif (D3) au-delà de la position d'ouverture de manière à générer un effort de freinage s'opposant à ce déplacement, le premier (24) et le deuxième élément de freinage (25) étant configurés de sorte que l'effort de freinage augmente lorsque la structure externe mobile (16) s'éloigne de la position d'ouverture.

2. Inverseur (12) selon la revendication 1, dans lequel le premier (24) et le deuxième élément de freinage (25) sont configurés de sorte que l'effort de freinage comprenne au moins une composante perpendiculaire par rapport à une direction (D2) de déplacement de la structure externe mobile (16).

3. Inverseur (12) selon la revendication 1 ou 2, dans lequel l'un parmi le premier (24) et le deuxième élément de freinage (25) comprend au moins un élément de guidage (24) tel qu'une glissière et l'autre parmi le premier (24) et le deuxième élément de freinage (25) comprend au moins un élément guidé (25) tel qu'un pion, ledit effort de freinage résultant de la coopération entre l'élément de guidage (24) et l'élément guidé (25).

4. Inverseur (12) selon la revendication3, dans lequel l'au moins un élément de guidage (24) forme une rainure configurée pour recevoir l'au moins un élément guidé (25), cette rainure (24) ayant une dimension (E1) qui varie selon une direction (D2) de déplacement de la structure externe mobile (16).

5. Inverseur (12) selon l'une quelconque des revendications 1 à 4, cet inverseur (12) comprenant des premiers moyens de guidage (20, 21) configurés pour guider la structure externe mobile (16) entre la position de fermeture et la position d'ouverture et des deuxièmes moyens de guidage (24, 25) configurés pour guider la structure externe mobile (16) lorsque celle-ci est déplacée dans le sens positif (D3) depuis la position d'ouverture, ces deuxièmes moyens de guidage (24, 25) comprenant les premier et deuxième éléments de freinage.

6. Inverseur (12) selon l'une quelconque des revendications 1 à 5, cet inverseur (12) comprenant une glissière (22) solidaire de l'une parmi la structure fixe et la structure externe mobile (16) et un élément coulissant (20) solidaire de l'autre parmi la structure fixe et la structure externe mobile (16), cette glissière (22) formant une première rainure (21) configurée pour recevoir ledit élément coulissant (20), la glissière (22) formant une deuxième rainure (24) formant l'un parmi le premier (24) et le deuxième élément de freinage (25), la deuxième rainure (24) étant configurée pour recevoir l'autre parmi le premier (24) et le deuxième élément de freinage (25).

7. Inverseur (12) selon l'une quelconque des revendications 1 à 6, cet inverseur (12) comprenant une butée (29) configurée pour empêcher le déplacement de la structure externe mobile (16) dans ledit sens positif (D3) au-delà d'une position d'arrêt, la butée (29) étant configurée de sorte que la structure externe mobile (16) soit soumise audit effort de freinage lorsque celle-ci est déplacée dans le sens positif (D3) entre la position d'ouverture et la position d'arrêt.

8. Inverseur (12) selon la revendication 7, dans lequel l'un parmi le premier (24) et le deuxième élément de freinage (25) est configuré pour coopérer avec la butée (29) lorsque la structure externe mobile (16) est déplacée jusqu'à la position d'arrêt de manière à immobiliser la structure externe mobile (16) dans la position d'arrêt.

9. Inverseur (12) selon la revendication 8, dans lequel l'un parmi la butée (29) et l'élément de freinage (25) coopérant avec cette butée (29) est configuré pour être plastiquement déformé par l'autre parmi la butée (29) et l'élément de freinage (25) coopérant avec cette butée (29) lorsque la structure externe mobile (16) est déplacée jusqu'à la position d'arrêt.

10. Ensemble propulsif (1) d'aéronef, cet ensemble propulsif (1) comprenant un inverseur de poussée (12) selon l'une quelconque des revendications précédentes.

## Patentansprüche

1. Schubumkehrvorrichtung (12) für eine Flugzeugantriebseinheit (1), wobei die Umkehrvorrichtung (12) eine feste Struktur und eine bewegliche äußere Struktur (16) umfasst, wobei die Schubumkehrvorrichtung (12) so konfiguriert ist, dass sie in
- eine Direktstrahlkonfiguration, bei der sich die bewegliche äußere Struktur (16) in einer geschlossenen Position befindet, wobei die bewegliche äußere Struktur (16) in der geschlossenen Position in der Lage ist, einen Fluidstrom (10B) in der Antriebseinheit (1) zu leiten, um einen Schub zu erzeugen,
- eine Umkehrstrahlkonfiguration, bei der sich die bewegliche äußere Struktur (16) in einer offenen Position befindet, wobei die bewegliche äußere Struktur (16) in der offenen Position eine radiale Öffnung freigibt, die in der Lage ist, einen Teil des Fluidstroms (10B) von der Antriebseinheit (1) abzugeben, um einen Gegenschub zu erzeugen,
gesetzt wird,
wobei die Bewegung der beweglichen äußeren Struktur (16) von der geschlossenen Position in die offene Position eine positive Bewegungsrichtung (D3) definiert, wobei die Umkehrvorrichtung (12) **dadurch gekennzeichnet ist, dass** die feste Struktur ein erstes Bremselement (24) umfasst und die bewegliche äußere Struktur (16) ein zweites Bremselement (25) umfasst, wobei das erste (24) und das zweite Bremselement (25) durch Gleiten mit Reibung miteinander zusammenwirken, wenn die bewegliche äußere Struktur (16) in der positiven Richtung (D3) über die offene Position hinaus bewegt wird, um eine Bremskraft zu erzeugen, die dieser Bewegung entgegenwirkt, wobei das erste (24) und das zweite Bremselement (25) so konfiguriert sind, dass die Bremskraft zunimmt, wenn sich die bewegliche äußere Struktur (16) von der offenen Position weg entfernt.

2. Umkehrvorrichtung (12) nach Anspruch 1, wobei das erste (24) und das zweite Bremselement (25) so konfiguriert sind, dass die Bremskraft mindestens eine Komponente senkrecht zu einer Bewegungsrichtung (D2) der beweglichen äußeren Struktur (16) umfasst.

3. Umkehrvorrichtung (12) nach Anspruch 1 oder 2, wobei eines von dem ersten (24) und dem zweiten Bremselement (25) mindestens ein Führungselement (24) wie etwa einen Schlitten umfasst und das andere von dem ersten (24) und dem zweiten Bremselement (25) mindestens ein geführtes Element (25) wie etwa einen Zapfen umfasst, wobei die Bremskraft aus dem Zusammenwirken zwischen dem Führungselement (24) und dem geführten Element (25) resultiert.

4. Umkehrvorrichtung (12) nach Anspruch 3, wobei das mindestens eine Führungselement (24) einen Schlitz bildet, der so konfiguriert ist, dass er das mindestens eine geführte Element (25) aufnimmt, wobei der Schlitz (24) eine Abmessung (E1) aufweist, die in Abhängigkeit von einer Bewegungsrichtung (D2) der beweglichen äußeren Struktur (16) variiert.

5. Umkehrvorrichtung (12) nach einem der Ansprüche 1 bis 4, wobei die Umkehrvorrichtung (12) erste Führungsmittel (20, 21) umfasst, die so konfiguriert sind, dass sie die bewegliche äußere Struktur (16) zwischen der geschlossenen Position und der offenen Position führen, und zweite Führungsmittel (24, 25), die so konfiguriert sind, dass sie die bewegliche äußere Struktur (16) führen, wenn diese aus der offenen Position in die positive Richtung (D3) bewegt wird, wobei die zweiten Führungsmittel (24, 25) das erste und das zweite Bremselement umfassen.

6. Umkehrvorrichtung (12) nach einem der Ansprüche 1 bis 5, wobei die Umkehrvorrichtung (12) einen Schlitten (22), der fest mit einer von der festen Struktur und der beweglichen äußeren Struktur (16) verbunden ist, und ein Gleitelement (20) umfasst, das mit der anderen von der festen Struktur und der beweglichen äußeren Struktur (16) verbunden ist, wobei der Schlitten (22) einen ersten Schlitz (21) bildet, der so konfiguriert ist, dass er das Gleitelement (20) aufnimmt, wobei der Schlitten (22) einen zweiten Schlitz (24) bildet, der eines von dem ersten (24) und dem zweiten Bremselement (25) bildet, wobei der zweite Schlitz (24) so konfiguriert ist, dass er das andere von dem ersten (24) und dem zweiten Bremselement (25) aufnimmt.

7. Umkehrvorrichtung (12) nach einem der Ansprüche 1 bis 6, wobei die Umkehrvorrichtung (12) einen Anschlag (29) umfasst, der so konfiguriert ist, dass er die Bewegung der beweglichen äußeren Struktur (16) in der positiven Richtung (D3) über eine Anschlagposition hinaus verhindert, wobei der Anschlag (29) so konfiguriert ist, dass die bewegliche äußere Struktur (16) der Bremskraft ausgesetzt ist, wenn diese in positiver Richtung (D3) zwischen der offenen Position und der Anschlagposition bewegt wird.

8. Umkehrvorrichtung (12) nach Anspruch 7, wobei eines von dem ersten (24) und dem zweiten Bremselement (25) so konfiguriert ist, dass es mit dem Anschlag (29) zusammenwirkt, wenn die bewegliche äußere Struktur (16) bis zur Anschlagposition bewegt wird, um die bewegliche äußere Struktur (16) in der Anschlagposition zu fixieren.

9. Umkehrvorrichtung (12) nach Anspruch 8, wobei einer von dem Anschlag (29) und dem mit dem Anschlag (29) zusammenwirkenden Bremselement (25) so konfiguriert ist, dass er bzw. es durch das andere von dem Anschlag (29) und dem mit dem Anschlag (29) zusammenwirkenden Bremselement (25) plastisch verformt wird, wenn die bewegliche äußere Struktur (16) in die Anschlagposition bewegt wird.

10. Flugzeugantriebseinheit (1), wobei die Antriebseinheit (1) eine Schubumkehrvorrichtung (12) nach einem der vorhergehenden Ansprüche umfasst.

## Claims

1. A thrust reverser (12) for an aircraft propulsion unit (1), this thrust reverser (12) comprising a fixed structure and a mobile external structure (16), this thrust reverser (12) being configured to be placed in:
- a direct jet configuration wherein the mobile external structure (16) is in a closed position, the mobile external structure (16) in the closed position being able to guide a flow of fluid (10B) in the propulsion unit (1) so as to generate a thrust,
- a reverse jet configuration wherein the mobile external structure (16) is in an open position, the mobile external structure (16) in the open position releasing a radial opening capable of discharging a portion of said fluid flow (10B) from the propulsion unit (1) so as to generate a counter-thrust,
the movement of the mobile external structure (16) from the closed position to the open position defining a positive sense of movement (D3), this thrust reverser (12) being **characterised in that** the fixed structure comprises a first braking element (24) and the mobile external structure (16) comprises a second braking element (25), the first (24) and the second braking element (25) cooperating with each other by sliding with friction when the mobile external structure (16) is moved in the positive sense (D3) beyond the open position so as to generate a braking force that opposes this movement, the first (24) and the second braking element (25) being configured so that the braking force increases when the mobile external structure (16) moves away from the open position.

2. The thrust reverser (12) according to claim 1, wherein the first (24) and the second braking element (25) are configured so that the braking force comprises at least one component perpendicular to a direction (D2) of movement of the mobile external structure (16).

3. The thrust reverser (12) according to claim 1 or 2, wherein one of the first (24) and the second braking element (25) comprises at least one guide element (24) such as a slide and the other of the first (24) and the second braking element (25) comprises at least one guided element (25) such as a peg, said braking force resulting from the cooperation between the guide element (24) and the guided element (25).

4. The thrust reverser (12) according to claim 3, wherein the at least one guide element (24) forms a slot configured to receive the at least one guided element (25), this slot (24) having a dimension (E1) which varies depending on a direction (D2) of movement of the mobile external structure (16).

5. The thrust reverser (12) according to any one of claims 1 to 4, this thrust reverser (12) comprising first guide means (20, 21) configured to guide the mobile external structure (16) between the closed position and the open position and second guide means (24, 25) configured to guide the mobile external structure (16) when the latter is moved in the positive sense (D3) from the open position, these second guide means (24, 25) comprising the first and second braking elements.

6. The thrust reverser (12) according to any one of claims 1 to 5, this thrust reverser (12) comprising a slide (22) integral with one of the fixed structure and the mobile external structure (16) and a sliding element ( 20) integral with the other of the fixed structure and the mobile external structure (16), this slide (22) forming a first slot (21) configured to receive said sliding element (20), the slide (22) forming a second slot (24) forming one of the first (24) and the second braking element (25), the second slot (24) being configured to receive the other of the first (24) and the second braking element (25).

7. The thrust reverser (12) according to any one of claims 1 to 6, this thrust reverser (12) comprising a stop (29) configured to prevent movement of the mobile external structure (16) in said positive sense (D3) beyond a stop position, the stop (29) being configured so that the mobile external structure (16) is subjected to said braking force when said mobile external structure is moved in the positive sense (D3) between the open position and the stop position.

8. The thrust reverser (12) according to claim 7, wherein one of the first (24) and the second braking element (25) is configured to cooperate with the stop (29) when the mobile external structure (16) is moved to the stop position so as to immobilise the mobile external structure (16) in the stop position.

9. The thrust reverser (12) according to claim 8, wherein one of the stop (29) and the braking element (25) cooperating with this stop (29) is configured to be plastically deformed by the other of the stop (29) and the braking element (25) cooperating with this stop (29) when the mobile external structure (16) is moved to the stop position.

10. An aircraft propulsion unit (1), this propulsion unit (1) comprising a thrust reverser (12) according to any one of the preceding claims.
